Europäisches Patentamt

European Patent Office

Office européen des brevets

(11) Veröffentlichungsnummer : **0 080 064**
**B1**

(12) **EUROPÄISCHE PATENTSCHRIFT**

(45) Veröffentlichungstag der Patentschrift :
30.07.86

(51) Int. Cl.⁴ : **H 01 M 4/66**, H 01 M 4/06,
H 01 M 4/38

(21) Anmeldenummer : 82109728.4

(22) Anmeldetag : 21.10.82

(54) Galvanisches Primärelement mit stromlos verzinktem negativen Elektrodenableiter.

(30) Priorität : 20.11.81 DE 3145929
20.11.81 DE 3145931
20.11.81 DE 3145930

(43) Veröffentlichungstag der Anmeldung :
01.06.83 Patentblatt 83/22

(45) Bekanntmachung des Hinweises auf die Patenterteilung : 30.07.86 Patentblatt 86/31

(84) Benannte Vertragsstaaten :
BE CH DE FR GB IT LI NL

(56) Entgegenhaltungen :
CHEMICAL ABSTRACTS, Band 83, Nr. 22, 1. Dezember 1975, Seite 184, Nr. 182022c, Columbus, Ohio, US

(73) Patentinhaber : VARTA Batterie Aktiengesellschaft
Am Leineufer 51
D-3000 Hannover 21 (DE)

(72) Erfinder : Gugenberger, Thorolf, Dr.
Adalbert-Stifter-Strasse 15
D-6233 Kelkheim (DE)

(74) Vertreter : Kaiser, Dieter Ralf, Dipl.-Ing.
Gundelhardtstrasse 72
D-6233 Kelkheim/Ts. (DE)

**0 080 064**

**Beschreibung**

Die Erfindung betrifft ein galvanisches Primärelement mit alkalischem Elektrolyten und negativer Zinkelektrode, die mit einem Ableiter versehen ist. Typische Primärelemente nach dem vorstehenden Gattungsbegriff sind beispielsweise Zink/Luft-oder Alkali-Mangan-Zellen. Ihre negativen Elektroden bestehen meist aus einer Schüttung von amalgamiertem Zinkpulver oder auch aus einer Zinkpaste, die einen Ableiter enthält. In vielen Fällen ist in das aktive Material ein Draht oder Nagel als Elektrodenableiter eingepreßt.

Mit Rücksicht auf eine gute Lagerfähigkeit im Elektrolyten ist das aktive Zink im allgemeinen mit beispielsweise ca. 4 Gew.% und mehr Quecksilber amalgamiert. Dennoch bleibt der Übergangsbereich zwischen dem Aktivmaterial und dem Ableiter, in welchem verschiedene Metalle in wechselseitigem Kontakt zueinander stehen, eine kritische Stelle innerhalb des Elements und bevorzugter Ort einer Wasserstoffabscheidung. Eine unzulässig hohe Gasentwicklung in alkalischen Primärelementen mit Zinkelektroden kann nicht nur für die Zelle selbst gefährliche Innendrucke erzeugen, sondern auch Verbrauchergeräte in ihrer Umgebung durch verstärkten Elektrolytaustritt in Mitleidenschaft ziehen.

Der Erfindung liegt deshalb die Aufgabe zugrunde, ein Primärelement der eingangs umrissenen Art verfügbar zu machen, bei welchem eine unzulässig hohe, interne Wasserstoffgasung vermieden wird.

Die Aufgabe wird erfindungsgemäß dadurch gelöst, daß der Ableiter mit einem stromlos aufgebrachten porenfreien Zinküberzug versehen ist.

Bei stromloser Verzinkung erfolgt die Beschichtung während eines galvanischen Kontakts zwischen dem Ableiter und hochreinem Zinkpulver in einem gemeinsamen Laugebad, wobei jedoch keine äußere Spannungsquelle verwendet wird.

In einer besonders vorteilhaften Ausführungsform des galvanischen Primärelements gemäß der Erfindung ist der verzinkte Ableiter mit einer negativen Elektrode verbunden, die aus quecksilberfreiem Zinkpulver mit geringer Gasungsrate besteht. Es hat sich nämlich gezeigt, daß durch die Verwendung von hochreinem Anodenzink im Kontakt mit verzinkten Ableitern die gefürchtete Wasserstoffgasung bereits stark eingedämmt werden kann, weil wegen der Abwesenheit von Quecksilber auf beiden Seiten Potentialunterschiede im wesentlichen aufgehoben sind. Eine Restaktivität geht allerdings auf die Verschiedenheit der chemischen Oberflächenpotentiale zurück, die daher rührt, daß das Anodenzinkpulver eine vielfach größere Oberfläche besitzt als die glatte Zinkbedeckung des Ableiters. Umgekehrt verhält es sich mit der Wasserstoffüberspannung, welche an glatten Flächen größer ist. Ein lokaler Stromausgleich zwischen den vorhandenen Inhomogenitäten ist die Folge.

Eine noch weitergehende Einschränkung der Zellengasung wird aber nun dadurch erreicht, daß erfindungsgemäß ein quecksilberfreies Anodenzink mit geringer Gasungsrate verwendet wird. Diese Eigenschaft haftet dem Reinstzink nicht ursprünglich an, sondern ist das Ergebnis einer speziellen Temperbehandlung in Lauge. Es wurde nämlich gefunden, daß im Verlaufe einer zeitlich ausgedehnten, sich über Tage erstreckenden Einwirkung von warmer Lauge auf das Zink die Korrosion zunächst zunimmt und sich dabei in einer ansteigenden Gasungsrate äußert. Die Gasung erreicht zu einem bestimmbaren zeitpunkt, — bei niedrigerer Temperatur langsamer, bei höherer Temperatur schneller — ein Maximum und geht darauf wieder zurück, wobei das Zink in einem Zustand anhaltender Passivität, sog. Pseudopassivität, verbleibt. Dieser als Thermostabilisierung zu bezeichnende Tempervorgang gemäß der Erfindung schafft eine durch äußerste Homogenität ausgezeichnete oxidische Haut am Zink und bewirkt so eine Reduzierung der Korrosionsanfälligkeit auf ein Minimum. Temperdauer und Temperatur der Temperung müssen lediglich so bemessen sein, daß ein Überschreiten des Gasungsmaximums sicher gewährleistet ist.

Besonders günstig ist es, wenn das Zinkpulver von vornherein mit einem Verdickungsmittel angeteigt ist, so daß es eine streichfähige Paste bildet und nach dem Tempern sogleich weiterverarbeitet werden kann. Als Verdickungsmittel sind unter anderem Stärke, Carboximethylcellulose, Carboxivinyl-Polymere oder Methacrylate geeignet. Eine verdickungsmittelhaltige Zink-Elektrolyt-Paste setzt sich beispielsweise wie folgt zusammen :

70 Gew.Tle Zink (reinst, Hg-frei)
29,5 Gew.Tle KOH, 40 %ig, + 3 Gew.% ZnO
0,5 Gew.Tle Carboxivinyl-Polymer (Carbopol)

Zu ihrer Herstellung werden 800 g für Batteriezwecke übliches Zinkpulver in einer Weithalsflasche aus Polyäthylen mit 5,71 g Verdicker homogen vermischt. Des weiteren werden 337 g ZnO-haltige Kalilauge, 40 %ig, portionsweise unter Rühren hinzugesetzt und der Mischprozeß bis zur völligen Homogenisierung fortgesetzt. Es empfiehlt sich, den Laugeelektrolyten vorher mit Zink zu gettern, um Sauerstoff und Schwermetalle zu entfernen und ihn zu filtrieren.

Im übrigen sollte die Zinkpaste zu keiner Zeit mit metallischen Gegenständen in Berührung kommen. Geeignete Materialien sind beispielsweise Glas, Polyäthylen, Porzellan oder Polytetrafluoräthylen.

Außer dem hochreinen Zink, sei es in Pulverform oder als Paste, ist auch ein zum Zwecke der Korrosionsinhibierung bereits versilbertes Zink dem erfindungsgemäßen Verfahren der stabilisierenden

2

# 0 080 064

Temperung zugänglich. Beim Ag-dotierten Zink ist der Stabilisierungseffekt sogar noch etwas ausgeprägter als beim Ag-freien Zink. Die Behandlung erfolgt hier zweckmäßig am verdickungsmittelfreien Pulver.

Die Versilberung eines quecksilberfreien, reinen Zinkpulvers kann auf folgende Weise geschehen : In die auf 8-10 °C gekühlte wässrige Lösung von 50 g $Na_2S_2O_3 \cdot 5\ H_2O$ in 100 cm³ werden 0,230 g AgO gelöst und 100 g Zink-Pulver zugesetzt und etwa 3 Minuten lang geschüttelt. Das versilberte Zink wird rückstandsfrei gewaschen und mindestens 90 Stunden bei 60 °C in 30 %iger KOH, enthaltend 3 % ZnO, getempert. Anschließend folgt der Waschprozeß mit dest. Wasser und möglichst rasches Trocknen bei Raumtemperatur im Vakuum.

Derartige Verfahren sind der europäischen Patentanmeldung 82 104 626 (EP-AI-0 070 373) « Verfahren zur Verminderung der Korrosion von nichtamalgamiertem Zink » zu entnehmen.

Die bei der erfindungsgemäßen Thermostabilisierung im allgemeinen benötigte Temperzeit liegt zwischen 200 und 500 h, während die Temperaturen zwischen 40 °C und 90 °C anzusetzen sind. Die vorzugsweisen Bedingungen sind 60 °C und 300 h. Zu ihrer Ermittlung kann ein Kontrollversuch dienen, der es gestattet, die zeitabhängige Veränderung des Gasungsverhaltens zu verfolgen. Bei diesem Test wird beispielsweise dem weiter vorn genannten und in einer Polyäthylenflasche bei 60 °C aufbewahrten Pastenansatz in bestimmten Zeitabständen jeweils eine Probe von 14 g (70 % Zink) entnommen, in ein Glaskölbchen mit seitlich angesetztem kalibrierten Steigrohr verbracht und die Probe mit Paraffinöl überschichtet. Das innerhalb einer bestimmten Zeitspanne (z. B. 6 h) anfallende Gasvolumen wird gemessen und auf 1g Zink umgerechnet. Die Umrechung ergibt die Gasungsrate zum Zeitpunkt der Probenahme. Nachstehende Tab. 1 gibt hierzu einige Zahlenwerte.

Tabelle 1

| Temperzeit | Gasungsrate bei 60°C |
|---|---|
| (h) | ($\mu$l $H_2$/g Zink . h) |
| 0 | 0,22 |
| 162 | 1,56 |
| 340 | 0,14 |
| 816 | 0,13 |
| 1032 | 0,11 |

Als wesentlicher Befund läßt sich der Tabelle entnehmen, daß das bei 60 °C getemperte Pastenzink schon im Frühstadium des Versuchs (nach 162 h) ein ausgeprägtes Gasungsmaximum durchläuft und sich später pseudopassiv verhält. Für den praktischen Anwendungsfall würde bis zum Erreichen dieses Zustandes eine Temperzeit von ca. 300 h vollauf genügen.

Durch die erfindungsgemäße Thermostabilisierung kann über ein Anodenzink verfügt werden, bei dem hinsichtlich seines Passivierungs- und Gasungsverhaltens die mit üblichen quecksilberfreien Zinkelektroden verbundenen Probleme weitgehend überwunden sind.

Der Ableiter für die negative, vorzugsweise quecksilberfreie Zinkpulverelektrode des anmeldungsgemäßen galvanischen Elements besitzt, wie eingangs bereits erwähnt, die Form eines Drahtes oder Nagels, der in das aktive Material eingepreßt ist.

Da ein solcher Nagel aus Messing, Kupfer oder verzinntem Stahl bestehend, üblicherweise keiner speziellen Vorbehandlung vor dem Einbau in die Zelle unterzogen wird, liegt seine Korrosionsanfälligkeit im Kontakt mit dem Elektrodenzink auf der Hand. Durch den erfindungsgemäßen, stromlos aufgebrachten Zinküberzug wird es nunmehr möglich, einen solchen Ableiter mit einer negativen Zinkpulverelektrode zu kombinieren, ohne eine gefährliche Wasserstoffbildung in Kauf nehmen zu müssen. Dieser Vorteil wirkt sich bei Zinkelektroden, die zumindest nahezu quecksilberfrei sind, besonders aus.

Wie eingangs bereits gesagt, ist die stromlose Verzinkung hier als ein Verfahren zu verstehen, welches ohne Einbeziehung einer äußeren Spannungsquelle arbeitet. Dagegen soll der Ableiter grundsätzlich in galvanischem Kontakt mit hochreinem Zinkpulver in alkalischer Lösung stehen.

Bei herkömmlichen alkalischen Zellen beobachtet man häufig als Folge des elektrischen Kontakts zwischen den amalgamierten Zinkelektroden und ihren Ableitern, beispielsweise aus Messing, eine starke Wasserstoffabscheidung, die aber allmählich an Intensität verliert, während sich gleichzeitig infolge einer innerhalb der Zelle ablaufenden autogenen Verzinkungsreaktion (interne autogene Verzinkung) am Ableiter eine Zinkschicht ausbildet.

Indessen führt der autogene Verzinkungsvorgang innerhalb der Zelle nicht zur Ausbildung einer idealen Zinkschutzschicht. Er läuft überdies zu langsam ab, so daß während der Verzinkungsphase aufgrund der anhaltenden Gasungsreaktion immer mit einem u. U. beträchtlichen Druckaufbau der Zelle gerechnet werden muß.

3

Bei dem erfindungsgemäßen Plattierverfahren hat es sich daher als besonders vorteilhaft erwiesen, daß der Ableiter zunächst außerhalb der Zelle und für sich allein der Einwirkung einer mit hochreinem Zinkpulver in Kontakt stehenden Alkalilauge ausgesetzt wird, wobei der Ableiter zu einem Teil seiner Länge in der Zinkpulverschüttung eingebettet ist.

Bei dieser Arbeitsweise entsteht eine überraschend gut haftende Zinkschicht, die in der Qualität und im Aussehen einer Glanzverzinkung gleichkommt.

Eine wesentliche Bedingung ist offenbar, daß vom Ableiter nur ein Teil mit dem Zinkpulver in direkter Berührung steht ; denn es wurde gefunden, daß beim vollständigen Eintauchen des Ableiters in die Zinkpulver-Lauge-Mischung, was mit dem Zustand in der Zelle vergleichbar ist, stets rauhe und matt aussehende Zink-Abscheidungen von geringer Haftbarkeit resultieren. An solchen Zink-Schichten ist wegen ihrer größeren Oberfläche die Wasserstoffüberspannung geringer als an glatten Zink-Flächen und die unerwünschte Wasserstoffentwicklung dementsprechend größer. Somit werden immer Potentialunterschiede zwischen dem Deckschicht- bzw. Ableiter-Zink und dem Anodenzink bestehen bleiben.

Als Alkalilauge ist eine 4-9 molare, vorzugsweise ca. 6 molare KOH-Lösung besonders geeignet. Der Abscheidungsvorgang wird im übrigen durch erhöhte Zinkatkonzentration wie auch durch erhöhte Laugetemperatur beschleunigt. Wichtig für den schnellen Ablauf ist auch die Verwendung einer $O_2$-freien KOH-Lösung.

Die Stärke der Zinkauflage läßt sich durch Veränderung der Abscheidungszeit in weiten Grenzen variieren. Sie muß aber mindestens so groß sein, daß der elektrochemische Einfluß des darunter liegenden Grundmetalls, beispielsweise Kupfer, nahezu verschwindet ; dies ist erreicht, wenn die Ruhebezugsspannung in $O_2$-freier KOH-Lösung bei Raumtemperatur gleich oder negativer als — 1 366 mV gegen Hg/HgO wird. Eine Tendenz der Bezugsspannung zu positiveren Werten zeigt eine Zinkkorrosion durch die Cu-Grundschicht an. Die Mindeststärke der Zink-Schicht sollte 0,13 µm betragen.

In einem Ausführungsbeispiel für das erfindungsgemäße Verfahren möge der zu verzinkende Ableiter ein sorgfältig entfetteter Kupfernagel sein. Dieser wird in eine Pulverschüttung aus reinstem Hg-freien Zink zu etwa 1/4 seiner Länge eingebettet und mit ZnO-freier oder ZnO-armer 6 molarer KOH-Lösung vollständig übergossen. Die Abscheidung des Zinks auf dem Kupfer erfolgt daraufhin langsam und über die Lösungsphase.

Nachdem sich im Verlaufe von 1 bis 2 Tagen bei Raumtemperatur eine sehr dünne und durchscheinende Zn-Schicht ausgebildet hat, setzt man die Einwirkung der Lauge über mehrere Tage bei erhöhter Temperatur von ca. 40 bis 60 °C fort, wobei sich die Zn-Schicht verdichtet.

Der hell glänzende verzinkte Nagel wird dann möglichst schnell mit destilliertem Wasser laugefrei gewaschen und im Vakuum getrocknet. Die Abtrennung von anhaftendem Zink-Pulver sollte erst nach vollständiger Trocknung erfolgen. Die Wirksamkeit der autogenen Verzinkung drückt sich in einem erheblichen Rückgang der Gasungsrate aus.

Aus den analytisch ermittelten Zn-Mengen, die sich während der Versuchsdauer am Cu-Nagel niederschlagen, kann der Abscheidungsverlauf verfolgt werden. Nachstehende Tabelle 2 enthält die abgeschiedenen Zn-Mengen im Zeitintervall 2,3 bis 558 Stunden. Zur Ermittlung der Schichtdicke der Zinkabscheidung wird eine mittlere Oberfläche des Cu-Nagels von 2,808 cm³ und ein spezifisches Gewicht des Zinks von 6,86 g/cm³ zugrunde gelegt.

Tabelle 2

| Kontaktzeit in Stdn. bei 45 °C | abgeschiedenes Zn pro Nagel $[g \cdot 10^{-4}]$ | Volumen d. Zn-Schicht $[cm \cdot 10^{-5}]$ | Schichtdicke d. Zn $[cm \cdot 10^{-6}]$ |
|---|---|---|---|
| 2,3 | 1,008 | 1,465 | 5,218 |
| 3 | 1,120 | 1,628 | 5,798 |
| 5 | 1,131 | 1,644 | 5,855 |
| 7 | 1,583 | 2,301 | 8,195 |
| 23 | 1,977 | 2,874 | 10,240 |
| 71 | 3,212 | 4,669 | 16,630 |
| 99 | 3,516 | 5,110 | 18,200 |
| 216 | 5,313 | 7,722 | 27,500 |
| 558 | 10,257 | 14,910 | 53,120 |

0 080 064

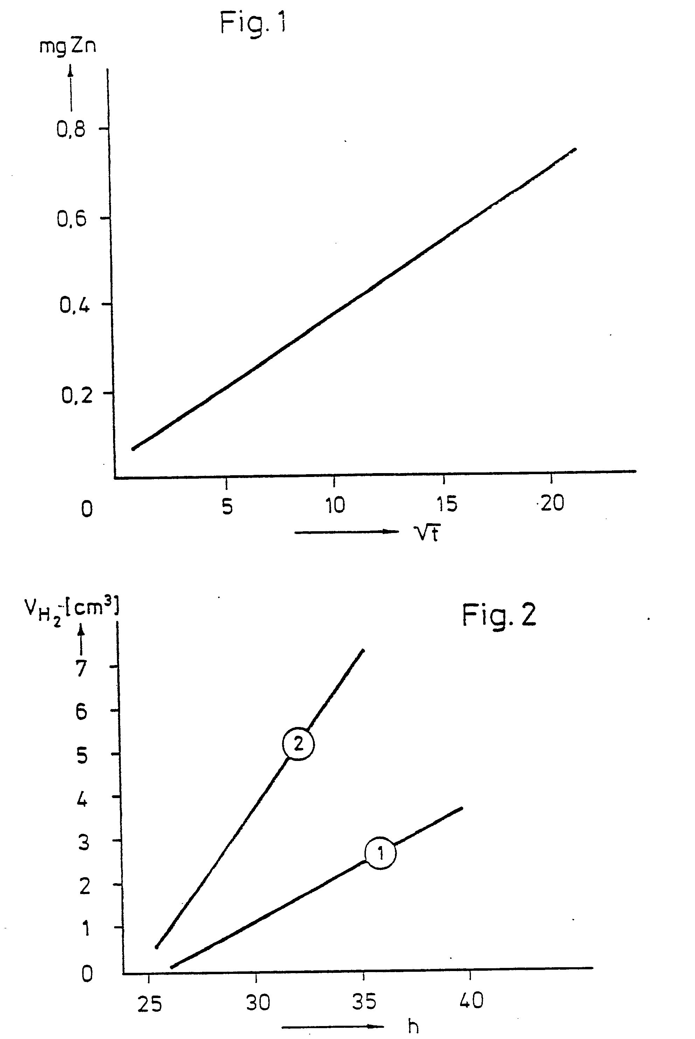

Die vorteihafte Wirkung des erfindungsgemäßen Verfahrens geht auch aus den Diagrammen nach Figur 1 und 2 hervor.

Figur 1 zeigt den zeitlichen Verlauf der Zinkabscheidung am Kupfer-Nagel unter Zugrundelegung der Zahlentabelle 2.

Figur 2 zeigt die Herabminderung der Wasserstoffentwicklung bei Hg-freiem Zinkpulver, das mit Kupfer-Nägeln in Kontakt steht, aufgrund der erfindungsgemäßen Maßnahme.

Die Zinkabscheidung nimmt in den ersten 200 Stunden einen parabolischen Zeitverlauf. Dieser kommt in der Figur 1 durch die Auftragung der Gewichtszunahme des Kupfer-Nagels (abgelöste mg Zn) gegen die Quadratwurzel der Kontaktzeit zum Ausdruck, bei der sich eine lineare Abhängigkeit ergibt.

Zur Untersuchung des Gasungsverhaltens wurden je 20 g Hg-freies, nicht stabilisiertes Zinkpulver, wie es für Primärelemente üblicherweise verwendet wird, bei 60 °C in 8,7 molarer KOH-Lösung, enthaltend 3 Gew.% ZnO, einmal in Gegenwart zweier autogen verzinkter Kupfer-Nägel und das andere Mal in Gegenwart zweier blanker Kupfer-Nägel behandelt. Die Herabsetzung der Gasproduktion ($V_{H2}$ Figur 2) in Anwesenheit der verzinkten Nägel (Gerade 1) gegenüber dem Vergleichstest mit den blanken Nägeln (Gerade 2) ist evident.

An den beiden zunächst blanken Cu-Nägeln korrodiert das Zink mit 34,9 $\mu$l $H_2$/g . h, an den verzinkten jedoch nur mit 13,1 $\mu$l $H_2$/g . h.

Die Abscheidung des an sich unedleren Zn aus seinen $Zn(OH)_4{}^{2-}$-Ionen auf dem edleren Cu ist aus dem Passivierungsverhalten des Zinks erklärlich. Im Augenblick der Kontaktierung des Cu-Nagels mit dem Zn-Pulver nimmt der Nagel ein Potential zwischen der anodischen Zinkauflösung und der kathodischen Wasserstoffabscheidung an, wobei sich wegen der nicht allzu hohen Wasserstoffüberspannung am Cu-Nagel vorerst nur $H_2$ abscheidet.

In einer Abwandlung des soeben beschriebenen Verzinkungsverfahrens ist es erfindungsgemäß auch möglich, die Behandlung des Ableiters in der gleichen Lauge vorzunehmen, ohne daß er jedoch in den vorhandenen Bodenkörper aus Zinkpulver eintaucht, sondern lediglich elektrischleitend, beispielsweise über einen dünnen Draht, mit diesem verbunden ist. Auch in diesem Falle wird unter sonst gleichen Bedingungen von Temperatur und Laugekonzentration wie bereits angegeben ein gleichmäßiger und porenfreier Zinküberzug erhalten.

Mehr jedoch als die erste, durch das Eintauchen des Ableiters in die Bodenkörper-Schüttung gekennzeichnete Arbeitsweise ist die zweite Methode für eine Massenverzinkung geeignet. Hierzu bedarf es lediglich einer Halterung aus inertem Material, beispielsweise auch Kunststoff, in welche eine Vielzahl von Ableitern, beispielsweise Messingnägel, eingesetzt werden kann und welche eine elektrische Kontaktierung der Nagelköpfe mit einem Leitblech oder dergleichen erlaubt, welches seinerseits über einen äußeren Schließungsdraht mit dem Bodenkörper verbunden ist. Die Halterung ist zweckmäßig so über dem Elektrolytspiegel angebracht, daß die Ableiter mit den Köpfen und darüber hinaus mit den Enden, welche später in den Dichtungsbereich des Zellendeckels fallen, nicht in das Laugebad eintauchen. Über der Lauge wird nach Möglichkeit eine $O_2$-freie oder eine Inertgas-Atmosphäre hergestellt.

Es liegt auch im Rahmen der Erfindung, das Verzinkungsbad in einer mit Gasschleusen versehenen Kammer anzuordnen und die Ableiter kontinuierlich an einem Conveyer durch das Bad zu bewegen. Die Herstellung des notwendigen elektrischleitenden Kontaktes zwischen Ableiterköpfen und Bodenkörper während der Durchlaufphase läßt sich über Rollen- und Schleifkontakte problemlos bewerkstelligen.

Selbstverständlich ist auch eine chargenweise Beschickung des Verzinkungsbades möglich.

Jeder Kopf eines Ableiters stellt einen Zellenpol dar und sollte daher von der Verzinkung stets ausgenommen bleiben. Wo eine Vollverzinkung jedoch schlecht zu vermeiden ist wie etwa bei dem Verfahren der Einbettung in den Zink-Bodenkörper, muß die Zinkauflage vom Kopfende, soweit es sich auch über die Dichtungszone erstreckt, nachträglich wieder abgelöst werden. Dies geschieht durch 5 bis 10 Sek. langes Eintauchen in eine Ätzlösung bei Raumtemperatur und anschließende Spülung mit destilliertem Wasser.

Eine geeignete Ätzlösung setzt sich beispielsweise wie folgt zusammen :

3 Tle Eisessig
1 Tl $HNO_3$     d = 1,50 g/cm³
6 Tle $H_3PO_4$     d = 1,71 g/cm³

Die stromlose, autogene Verzinkung liefert besonders gute Schichten, wenn die Ableiter nach dem Entfetten und vor dem Verzinken einer Beizung unterzogen werden. Die Beizbehandlung liefert eine für die Zinkabscheidung besonders geeignete Oberflächenstruktur des metallischen Grundmaterials. Das Beizbad besitzt zweckmäßig die gleiche Rezeptur wie die vorstehend angegebene Ätzlösung. Die Tauchdauer beträgt 1 bis 2 Minuten, die Temperatur des Bades 30 bis 50 °C. Nach der Beizung wird gründlich mit destilliertem Wasser gespült.

Eine günstige Eigenschaft des erfindungsgemäßen Ableiters besteht schließlich darin, daß er eine Paraffin- oder Wachshaut besitzt. Als Finishing nach dem Verzinken und ggfls. Abätzen der Zinkschicht am Kopf und im Dichtungsbereich ist daher eine Paraffinierung des Ableiters vorgesehen, die sich zunächst nur über den verzinkten Teil erstreckt und während des Lagerns oder Hantierens eine

5

Schutzwirkung ausübt. Zu diesem Zweck werden die Ableiter-Nägel bis zum Dichtungsbereich in ein Paraffinbad von 100 bis 120 °C (Erstarrungspunkt 46 bis 48 °C) getaucht und schnell aus dem Bad gezogen. Es verbleibt ein dünner, leicht abziehbarer Paraffinfilm.

Bei der Montage wird dann der so präparierte Ableiter durch die Kunststoffdichtung gedrückt und der Paraffin- oder Wachsüberzug zusammen mit möglicherweise anhaftenden Verunreinigungen an der Außenkante der Dichtung abgestreift. Der in den stets vorhanden makroskopischen Vertiefungen des Ableiters verbleibende Paraffinrest verringert beim Durchdrücken des Ableiters den Reibungswiderstand zwischen Nagel und Dichtung in vorteilhafter Weise.

Paraffinreste, dei u. U. an das Anodenzink gelangt sind, verursachen nach dem Ergebnis von Stromdichte-Potential-Messungen keine merkliche Vergrößerung des Ohm'schen Widerstandes.

**Patentansprüche**

1. Galvanisches Primärelement mit alkalischem Elektrolyten und negativer Zinkelektrode, die mit einem Ableiter versehen ist, dadurch gekennzeichnet, daß der Ableiter mit einem stromlos aufgebrachten porenfreien Zinküberzug versehen ist.

2. Galvanisches Primärelement nach Anspruch 1, dadurch gekennzeichnet, daß die Zinkelektrode aus quecksilberfreiem Zinkpulver mit geringer Gasungsrate besteht.

3. Galvanisches Primärelement nach den Ansprüchen 1 und 2, dadurch gekennzeichnet, daß das quecksilberfreie Zinkpulver durch Tempern in alkalischem Elektrolyten stabilisiert ist.

4. Galvanisches Primärelement nach den Ansprüchen 1 bis 3, dadurch gekennzeichnet, daß das stabilisierte quecksilberfreie Zinkpulver mit einem Verdickungsmittel angeteigt ist.

5. Galvanisches Primärelement nach den Ansprüchen 1 bis 3, dadurch gekennzeichnet, daß das quecksilberfreie Zinkpulver mit Silber dotiert ist.

6. Galvanisches Primärelement nach einem der Ansprüche 1 bis 5, dadurch gekennzeichnet, daß der Zinküberzug den Ableiter mit Ausnahme des Kopfes und des im Dichtungsbereich liegenden Endes bedeckt.

7. Galvanisches Primärelement nach Anspruch 6, dadurch gekennzeichnet, daß die Dicke der Zinkschicht auf dem Ableiter etwa 0,13 $\mu$m beträgt.

8. Galvanisches Primärelement nach Anspruch 7, dadurch gekennzeichnet, daß der verzinkte Ableiter eine Paraffin-oder Wachshaut besitzt.

9. Galvanisches Primärelement nach einem der Ansprüche 1 bis 8, dadurch gekennzeichnet, daß das Grundmaterial des Ableiters Kupfer, Messig oder verkupfertes Eisen ist.

10. Verfahren zur Herstellung eines galvanischen Primärelements mit alkalischem Elektrolyten und negativer Zinkelektrode, die mit einem Ableiter versehen ist, dadurch gekennzeichnet, daß der Ableiter vor der Montage auf stromlosem Wege mit einem porenfreien Zinküberzug versehen wird.

**Claims**

1. A galvanic primary cell with an alkaline electrolyte and a negative zinc electrode which is provided with a conductor characterized in that the conductor is provided with a non-porous zinc coating applied without current.

2. A galvanic primary cell according to Claim 1, characterized in that the zinc electrode consists of mercury-free zinc powder with a low gas ratio.

3. A galvanic primary cell according to Claims 1 and 2, characterized in that the mercury-free zinc powder is stabilized by tempering in an alkaline electrolyte.

4. A galvanic primary cell according to Claims 1 to 3, characterized in that the stabilized mercury-free zinc powder is made into a paste with a thickening agent.

5. A galvanic primary cell according to Claims 1 to 3, characterized in that the mercury-free zinc powder is doped with silver.

6. A galvanic primary cell according to Claims 1 to 5, characterized in that the zinc coating covers the conductor with the exception of the head and the end situated in the sealing area.

7. A galvanic primary cell according to Claim 6, characterized in that the thickness of the zinc layer on the conductor amounts to approximately 0.13 $\mu$m.

8. A galvanic primary cell according to Claim 7, characterized in that the zinc-coated conductor has a paraffin or wax skin.

9. A galvanic primary cell according to Claims 1 to 8, characterized in that the basic material of the conductor is copper, brass or coppered iron.

10. A method of producing a galvanic primary cell with an alkaline electrolyte and a negative zinc electrode which is provided with a conductor characterized in that the conductor is provided before assembly with a non-porous zinc coating in a currentless manner.

**Revendications**

1. Elément galvanique primaire avec un électrolyte alcalin et une électrode négative en zinc, qui est

**0 080 064**

munie d'un conducteur, élément caractérisé en ce que le conducteur est muni d'un revêtement de zinc exempt de pores déposé en l'absence de courant.

2. Elément galvanique primaire selon la revendication 1, caractérisé en ce que l'électrode en zinc est constituée de poudre de zinc exempte de mercure avec un taux de dégagement gazeux réduit.

3. Elément galvanique primaire selon les revendications 1 et 2, caractérisé en ce que la poudre de zinc exempte de mercure est stabilisée par recuit dans l'électrolyte alcalin.

4. Elément galvanique primaire selon les revendications 1 à 3, caractérisé en ce que la poudre de zinc stabilisée exempte de mercure est empâtée avec un produit épaississant.

5. Elément galvanique primaire selon les revendications 1 à 3, caractérisé en ce que la poudre de zinc exempte de mercure est dopée à l'argent.

6. Elément galvanique primaire selon une des revendications 1 à 5, caractérisé en ce que le revêtement de zinc recouvre le conducteur à l'exception de la tête et de la partie d'extrémité se trouvant dans la zone d'étanchement.

7. Elément galvanique primaire selon la revendication 6, caractérisé en ce que l'épaisseur de la couche de zinc sur le conducteur est d'environ 0,13 $\mu$m.

8. Elément galvanique primaire selon la revendication 7, caractérisé en ce que le conducteur zingué a une peau de paraffine ou de cire.

9. Elément galvanique primaire selon une des revendications 1 à 8, caractérisé en ce que le matériau de base du conducteur est du cuivre, du laiton ou bien de l'acier cuivré.

10. Procédé pour réaliser un élément galvanique primaire avec un électrolyte alcalin et une électrode négative en zinc, munie d'un conducteur, procédé caractérisé en ce que le conducteur est muni, avant le montage, par des moyens ne faisant pas appel au courant électrique, d'un revêtement en zinc exempt de pores.

## Fig. 1

## Fig. 2